# EUROPEAN PATENT SPECIFICATION

(11) **EP 4 297 152 B1**
(45) Date of publication and mention of the grant of the patent: **11.03.2026**
(21) Application number: 22898927.3
(22) Date of filing: 15.11.2022
(51) Int. Cl.: H01M 10/6562, H01M 10/613, H01M 10/653, H01M 10/625, H01M 10/627

(54) **BATTERY CASE HAVING NATURAL HEAT DISSIPATION FUNCTION**
BATTERIEGEHÄUSE MIT NATÜRLICHER WÄRMEABLEITUNGSFUNKTION
BOÎTIER DE BATTERIE À FONCTION DE DISSIPATION DE CHALEUR NATURELLE

(30) Priority: 23.11.2021 KR 20210162571; 08.11.2022 KR 20220147774
(43) Date of publication of application: 27.12.2023
(73) Proprietor: LG Energy Solution Ltd., Seoul 07335 (KR)
(72) Inventor: YOO, Chi Gohn, Daejeon 34122 (KR); LEE, Jin Hyun, Daejeon 34122 (KR); JUNG, Dae Ho, Daejeon 34122 (KR)
(74) Representative: Plasseraud IP
(86) International application number: PCT/KR2022/017935
(87) International publication number: WO 2023/096245

(56) References cited:
- JP-B2- 3 251 734
- KR-A- 20210 020 443
- KR-B1- 101 528 404
- KR-B1- 101 552 483
- KR-U- 20000 015 369
- KR-U- 20000 015 369
- KR-U- 20140 001 394
- US-A1- 2017 187 079

## Description

### [Technical Field]

This application claims the benefit of priority to Korean Patent Application No. 2021-0162571 filed on November 23, 2021 and Korean Patent Application No. 2022-0147774 filed on November 8, 2022.

The present invention relates to a battery case having a natural heat dissipation function capable of discharging heat generated from a battery cell or a battery module received therein to the outside without a separate cooling device, whereby it is possible to reduce the temperature in the case.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS) .

There are a lithium ion battery, a lithium polymer battery, a nickel cadmium battery, a nickel hydride battery, and a nickel zinc battery as secondary batteries that are widely used at present.

The operating voltage of a unit secondary battery cell, i.e. a unit battery cell, is about 2.0 V to 5.0 V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. Furthermore, a battery pack is generally manufactured using at least one battery module by adding an additional component.

Meanwhile, for a battery module, there is a danger of stability and efficiency of a battery cell being lowered by heat generated therefrom during charging and discharging. In order to prevent this, various methods are used to cool the battery module.

As an example, an air cooling type cooling method using a cooling gas may be used. In this case, a device, such as a cooling fan, is generally provided.

In Patent Document 1, which relates to an air cooling apparatus for battery systems, devices, such as a cooling fan and a cooling channel, are provided to cool a battery system. In this case, however, there is a problem in that production cost is increased due to addition of the cooling device or energy density is lowered due to the installation space thereof.

### (Prior Art Document)

(Patent Document 1) Korean Patent Application Publication No. 2015-0044162

KR 2021 0020443 A discloses a battery case. KR 2000 0015369 U discloses louver windows for ships.

### [Disclosure]

### [Technical Problem]

The present invention has been made in view of the above problems, and it is an object of the present invention to provide a battery case having a structure capable of discharging heat generated from a battery cell or a battery module received in the case to the outside without a separate cooling device.

### [Technical Solution]

A battery case according to the present invention to accomplish the above object includes a case body (100) having a hollow structure and at least one opening (110); and a ventilation unit (200) mounted in the at least one opening (110), wherein the ventilation unit (200) includes a frame (210) configured to define an outer part thereof, at least one first heat dissipation portion (220) disposed in the frame (210) so as to be inclined at a predetermined angle, the at least one first heat dissipation portion having a plate shape, and a second heat dissipation portion (230) located along an upper edge and/or a lower edge of the at least one first heat dissipation portion (220), the second heat dissipation portion being provided with a plurality of second through-holes (231).

Also, in the battery case according to the present invention, the lower edge of the at least one first heat dissipation portion (220) may be inclined more toward an outside of the case body (100) than the upper edge of the at least one first heat dissipation portion.

Also, in the battery case according to the present invention, the at least one first heat dissipation portion (220) may be located parallel to a first surface of the case body (100).

Also, in the battery case according to the present invention, the at least one first heat dissipation portion (220) may be formed so as to form an acute angle with the first surface of the case body (100).

Also, in the battery case according to the present invention, the at least one first heat dissipation portion (220) may include a metal material or a thermally conductive resin.

Also, in the battery case according to the present invention, the second heat dissipation portion (230) may include a metal material or a thermally conductive resin.

Also, the battery case according to the present invention may further include a third heat dissipation portion (240) having a plate shape located at an outer surface of the at least one first heat dissipation portion (220), the third heat dissipation portion being provided with a plurality of third through-holes (241), wherein the at least one first heat dissipation portion (220) may be provided with a plurality of first through-holes (221) and a support portion (222) spaced apart from the outer surface of the at least one first heat dissipation portion (220) by a predetermined distance such that the third heat dissipation portion (240) is slidable, the support portion being configured to cover an edge of the third heat dissipation portion (240), and some or all of the plurality of first through-holes (221) and some or all of the plurality of third through-holes (241) may overlap each other or all of the plurality of first through-holes and all of the plurality of third through-holes may not overlap each other due to movement of the third heat dissipation portion (240).

Also, in the battery case according to the present invention, each of the at least one first heat dissipation portion (220), the second heat dissipation portion (230), and the third heat dissipation portion (240) may include a metal material.

Also, in the battery case according to the present invention, a coating layer (250) having a plurality of fourth through-holes (251) may be located on an inner surface or an outer surface of the second heat dissipation portion (230), a sectional area of each of the plurality of fourth through-holes (251) may be greater than a sectional area of each of the plurality of second through-holes (231), all of the plurality of second through-holes (231) may be exposed through the plurality of fourth through-holes (251), and the coating layer (250) may include a thermally conductive resin that is melted at a lower temperature than the second heat dissipation portion (230).

Also, in the battery case according to the present invention, the at least one first heat dissipation portion (220) may be formed so as to form an acute angle with a first surface of the case body (100).

In addition, the present invention provides a battery module including the battery case and a plurality of battery cells received in the battery case.

Also, in the battery module according to the present invention, each of the plurality of battery cells may be any one of a cylindrical battery cell, a prismatic battery cell, and a pouch-shaped battery cell.

In addition, the present invention provides a battery pack including the battery case and a plurality of battery modules received in the battery case.

### [Advantageous Effects]

As is apparent from the above description, a battery case according to the present invention has a merit in that the battery case is provided with a ventilation unit having a through-hole formed therein, whereby it is possible to discharge heat in the battery case to the outside without a separate cooling device.

In addition, the battery case according to the present invention has a merit in that a separate device for cooling is omitted or minimized, whereby it is possible to improve energy density due to reduction in volume and weight and to reduce production cost.

In addition, the battery case according to the present invention has an advantage in that it is possible to adjust the opening and closing area of the through-hole depending on an external environment.

Furthermore, the battery case according to the present invention has a merit in that a coating layer capable of closing the through-hole when the temperature in the battery case reaches a predetermined temperature or higher is provided, whereby it is possible to block introduction of air into the case, and therefore it is possible to minimize a possibility of fire outbreak.

### [Description of Drawings]

FIG. 1 is a perspective view of a battery case according to a first preferred embodiment of the present invention.
FIG. 2 is an exploded perspective view of the battery case shown in FIG. 1.
FIG. 3 is an enlarged perspective view of a ventilation unit shown in FIG. 1.
FIG. 4 is a sectional view taken along line A-A' of FIG. 1.
FIG. 5 is an exploded perspective view of a ventilation unit according to a second preferred embodiment of the present invention.
FIG. 6 is an exploded perspective view of the ventilation unit shown in FIG. 5 when viewed from another angle.
FIG. 7 is an exploded perspective view of the ventilation unit shown in FIG. 5.
FIG. 8 is a view illustrating the function of a third heat dissipation portion depending on an outside air environment.
FIG. 9 is a sectional view taken along line B-B' of FIG. 5 as a third preferred embodiment of the present invention.
FIG. 10 is an exploded perspective view of a second heat dissipation portion and a coating layer.
FIG. 11 is an exploded perspective view of a second heat dissipation portion and a coating layer as a fourth preferred embodiment of the present invention.

### [Detailed Description]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the present application, descriptions related to upward and downward directions may mean a lower side and an upper side or one side and the other side depending on the installation direction of each component.

Hereinafter, a battery case having a natural heat dissipation function according to the present invention will be described with reference to the accompanying drawings.

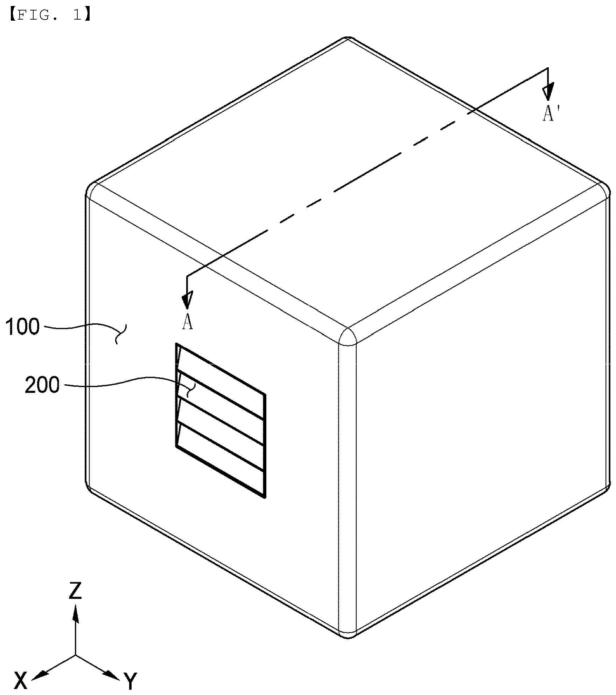

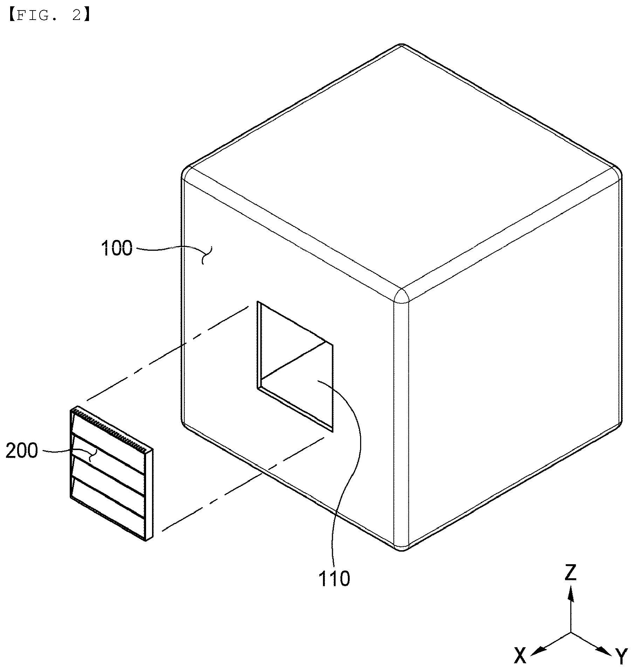

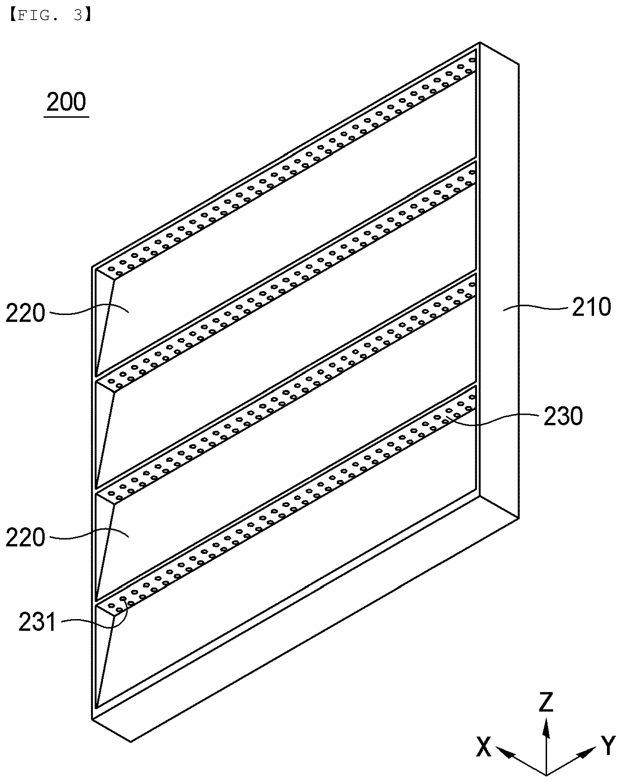

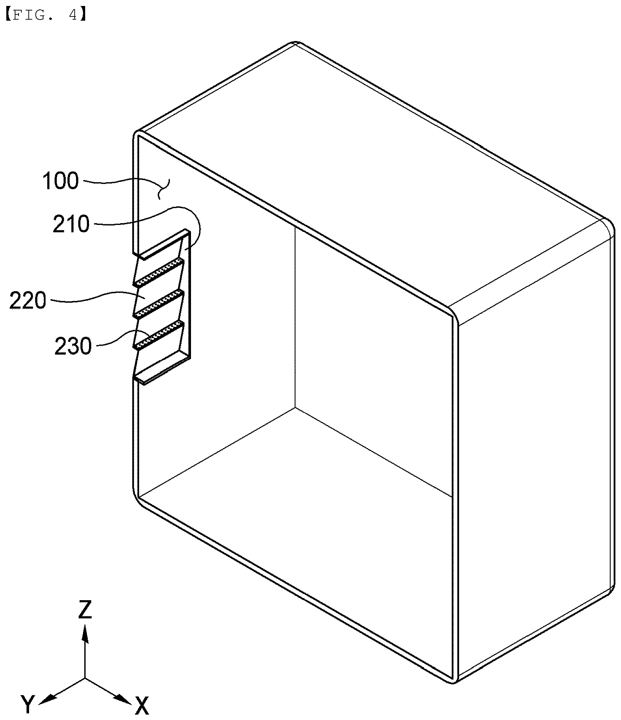

FIG. 1 is a perspective view of a battery case according to a first preferred embodiment of the present invention, and FIG. 2 is an exploded perspective view of the battery case shown in FIG. 1. In addition, FIG. 3 is an enlarged perspective view of a ventilation unit shown in FIG. 1, and FIG. 4 is a sectional view taken along line A-A' of FIG. 1.

When describing the battery case according to the first embodiment of the present invention with reference to FIGs. 1 to 4, the battery case includes a case body 100 and a ventilation unit 200.

The case body 100 serves to protect at least one battery cell (not shown) or at least one battery module (not shown) received therein, and may be defined by a bottom surface, a side surface, and an upper surface. Of course, the bottom surface and the side surface may form the body, and the upper surface may be a cover. Hereinafter, a description will be given on the assumption that the bottom surface is a first surface, the side surface is a second surface, and the upper surface is a third surface.

At least one ventilation unit 200 is mounted to the second surface constituting the case body 100, and an opening 110, in which the ventilation unit 200 is mounted, is formed in the second surface. Here, it is preferable for the number of openings 110 to be equal to the number of ventilation units 200 mounted therein.

When describing the ventilation unit 200 mounted in the opening 110 of the case body 100 in more detail, the ventilation unit 200 may include a frame 210, a first heat dissipation portion 220, and a second heat dissipation portion 230.

The frame 210 defines an outer edge of the ventilation unit 200 as the result of a plurality of unit members each having a predetermined width and length being connected to each other. Although the overall outer shape of the frame is shown as being quadrangular in the drawings, the shape of the frame may be changed without limit.

The first heat dissipation portion 220, which has a plate shape, is configured to discharge heat generated in the case body 100 to the outside in a state of being fixed to the frame 210. That is, heat exchange between the inside and the outside of the case body 100 is performed.

Consequently, the first heat dissipation portion 220 is made of a material that exhibits high thermal conductivity in order to smoothly perform heat exchange. It is preferable for the first heat dissipation portion to be made of a metal, such as aluminum or copper, or a resin that exhibits excellent thermal conductivity in further consideration of processability.

The resin that exhibits excellent thermal conductivity is not particularly restricted as long as the resin is in a solid state at a normal temperature. As an example, it is preferable for the resin that exhibits excellent thermal conductivity to be urethane or silicone, and it is more preferable for metal particles, such as alumina, to be added thereto.

A plurality of first heat dissipation portions 220 may be provided. At this time, the first heat dissipation portions are fixed to the frame 210 in an inclined state while having a predetermined angle with respect to the opening 110, whereby it is possible to increase a contact area with air inside and outside the case body 100, which may improve a heat dissipation effect.

Here, although the inclined angle of the first heat dissipation portion 220 is not particularly restricted, it is preferable for a lower edge of the first heat dissipation portion to be inclined more toward the outside of the case body 100 (the left in FIG. 1) than an upper edge of the first heat dissipation portion in order to minimize introduction of water or moisture into a second through-hole 231 of the second heat dissipation portion 230, and it is more preferable for the lower edge not to protrude more than the second surface of the case body 100.

The second heat dissipation portion 230, which has a plate shape, is located along the upper edge and/or the lower edge of the first heat dissipation portion 220. The second heat dissipation portion may be fixed to the first heat dissipation portion 220 or may be fixed to the frame 210, and a plurality of second through-holes 231 are provided in the second heat dissipation portion.

At this time, it is preferable for the second through-hole 231 to have a diameter of about 0.5 to 1.5 mm in order to discharge inside hot air and furthermore to minimize the introduction of foreign matter or moisture.

Meanwhile, it is preferable for the second heat dissipation portion 230 to be located parallel to the first surface of the case body 100 in order to securely prevent the introduction of foreign matter or moisture, and it is more preferable for the second heat dissipation portion to have an acute angle of greater than 0° to less than 90°.

The second heat dissipation portion 230 reduces the temperature in the case body 100 through heat exchange, in the same manner as the first heat dissipation portion 220. Consequently, the second heat dissipation portion may be made of the same material as the first heat dissipation portion 220, such as a metal or a thermally conductive resin; however, the second heat dissipation portion may be made of a different material from the first heat dissipation portion as long as the second heat dissipation portion is capable of performing a heat dissipation function.

The frame 210, the first heat dissipation portion 220, and the second heat dissipation portion 230 constituting the ventilation unit 200 may be integrally manufactured by injection molding, or may be manufactured by insert injection molding when the above components are made of different materials.

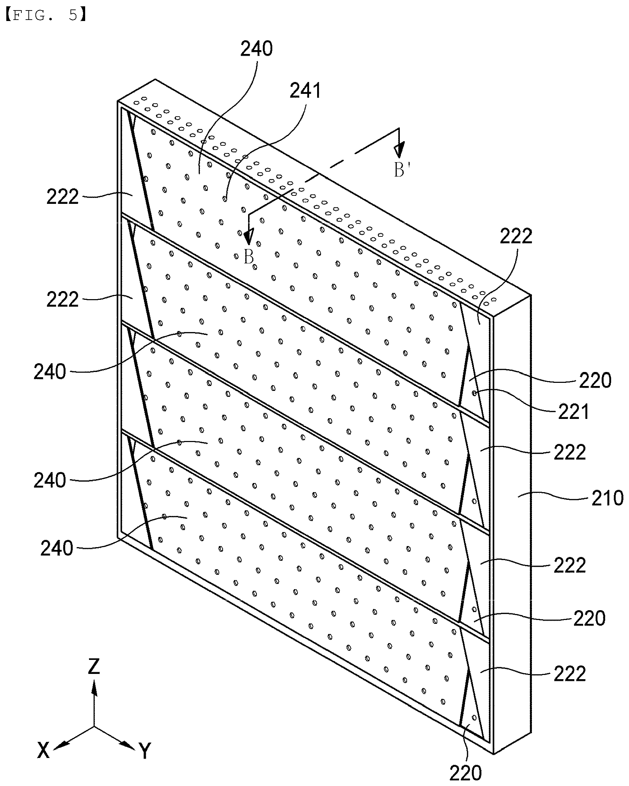

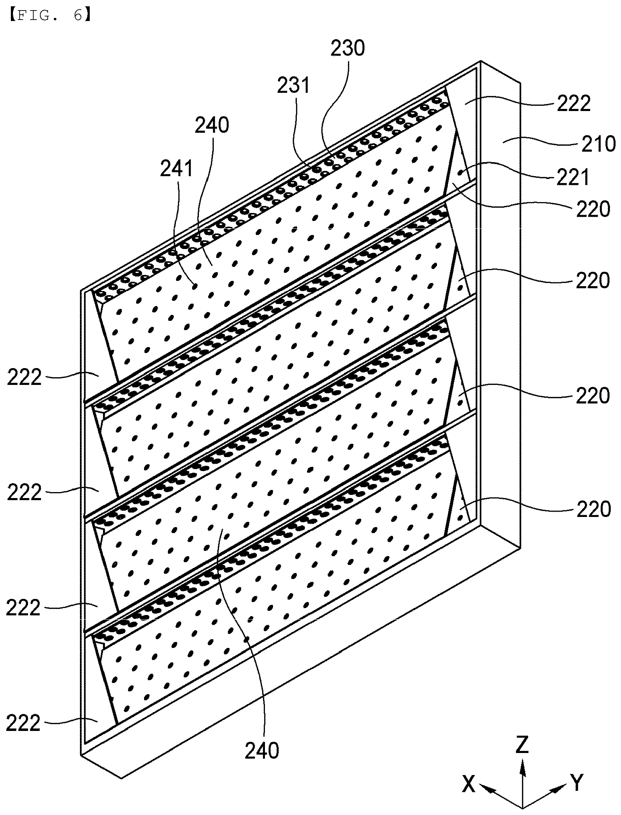

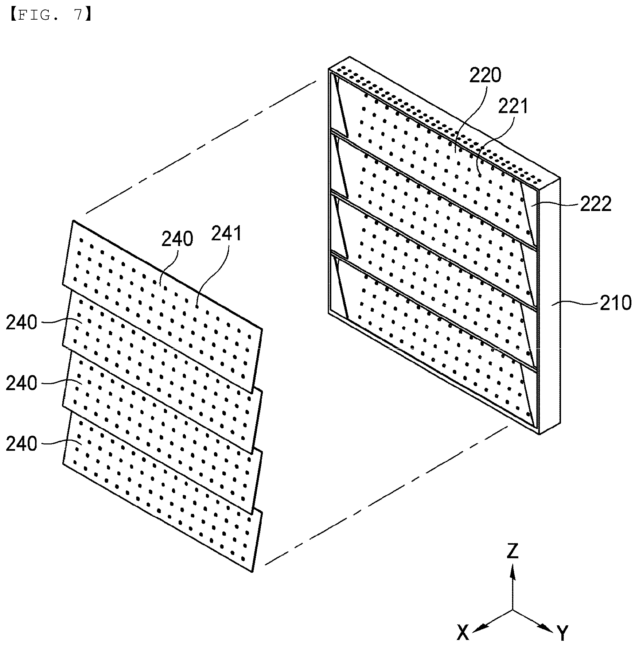

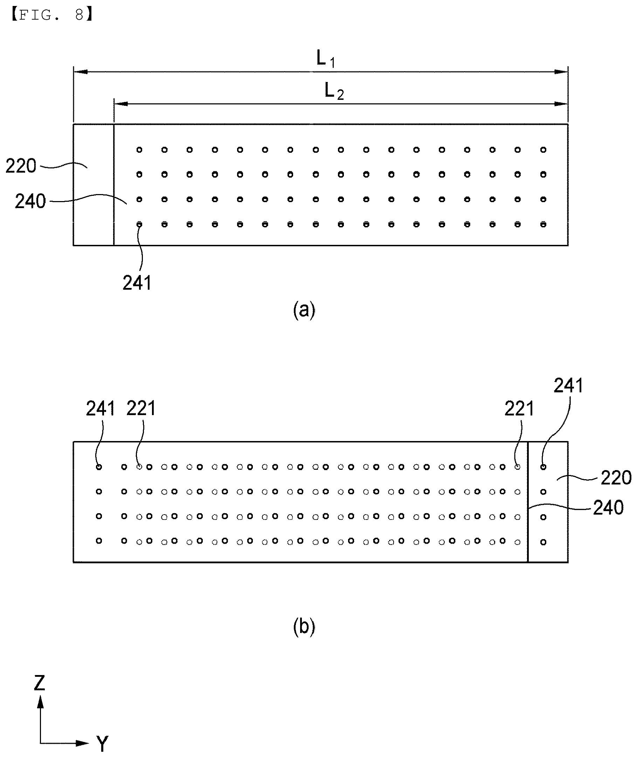

FIG. 5 is an exploded perspective view of a ventilation unit according to a second preferred embodiment of the present invention, and FIG. 6 is an exploded perspective view of the ventilation unit shown in FIG. 5 when viewed from another angle. In addition, FIG. 7 is an exploded perspective view of the ventilation unit shown in FIG. 5, and FIG. 8 is a view illustrating the function of a third heat dissipation portion depending on an outside air environment.

The second embodiment of the present invention will be described with reference to FIGs. 5 to 8, and the second embodiment is identical in construction to the first embodiment except for the ventilation unit.

The ventilation unit 200 according to the second embodiment of the present invention includes a frame 210, a first heat dissipation portion 220, a second heat dissipation portion 230, and a third heat dissipation portion 240. The frame 210 is identical to the frame of the first embodiment, and therefore a duplicate description will be omitted.

The first heat dissipation portion 220 is provided with a first through-hole 221 and a support portion 222, and the third heat dissipation portion 240, which is formed in a plate shape and has a plurality of third through-holes 241 formed therein, is located at an outer surface of the first heat dissipation portion 220.

The support portion 222, which is configured to support the third heat dissipation portion 240, is provided at one side or opposite sides of an edge of the first heat dissipation portion 220. In addition, the third heat dissipation portion 240 is spaced apart from the outer surface of the first heat dissipation portion 220 by a predetermined distance such that the third heat dissipation portion is located between the first heat dissipation portion 220 and the support portion 222.

Meanwhile, the length L2 of the third heat dissipation portion is slightly less than the length L1 of the first heat dissipation portion. The reason for this is that the third heat dissipation portion slides in front of the first heat dissipation portion 220 in a longitudinal direction in order to adjust the positions of the third through-holes 241.

For example, when external weather conditions are good, the position of the third heat dissipation portion 240 is adjusted such that the first through-holes 221 and the third through-holes 241 are aligned with each other in order to rapidly discharge heat in the case body 100 to the outside ((a) of FIG. 8). On the other hand, when external weather conditions are bad, e.g. when it rains, the position of the third heat dissipation portion 240 is changed such that the first through-holes 221 and the third through-holes 241 are misaligned with each other ((b) of FIG. 8).

Of course, it is obvious that the position of the third heat dissipation portion 240 can be adjusted such that only some of the first through-holes 221 and some of the third through-holes 241 overlap each other, as needed.

As described above, the battery case according to the second embodiment of the present invention has a structure in which heat in the case can be more rapidly discharged to the outside through the first through-holes 221 of the first heat dissipation portion 220 and the third through-holes 241 of the third heat dissipation portion 240.

In the second embodiment of the present invention, it is preferable for each of the first heat dissipation portion 220, the support portion 222, and the third heat dissipation portion 240 to be made of a metal that exhibits excellent thermal conductivity, such as aluminum or copper.

Although the support portion 222 is shown as having a plate shape in the drawings, the shape or position of the support portion is not particularly restricted as long as the support portion is capable of sliding while supporting the third heat dissipation portion 240.

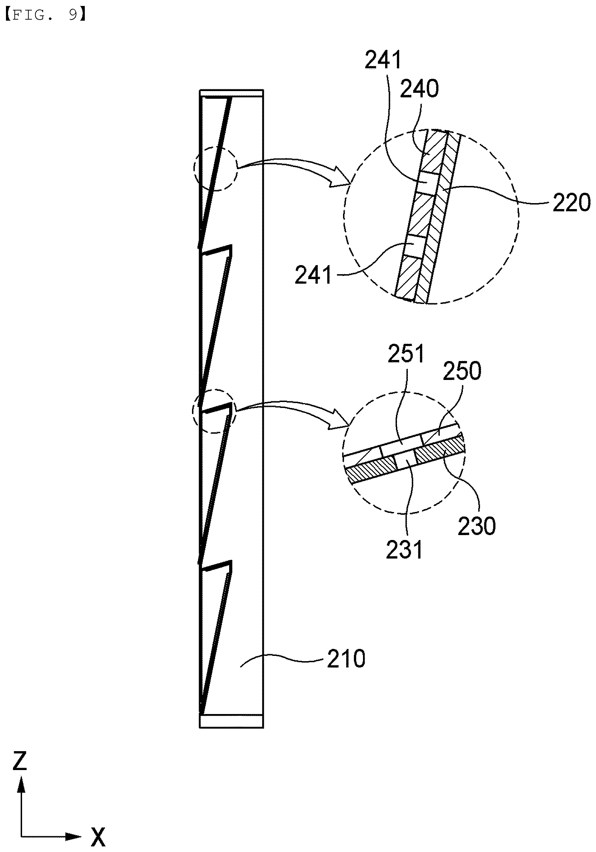

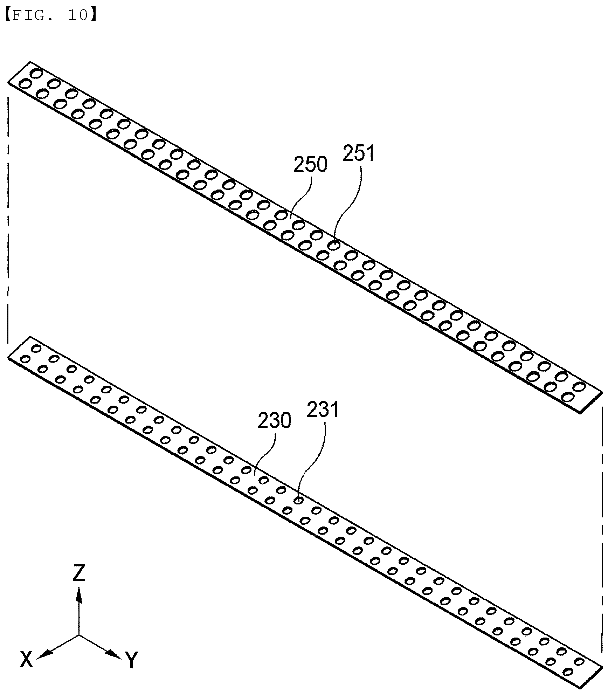

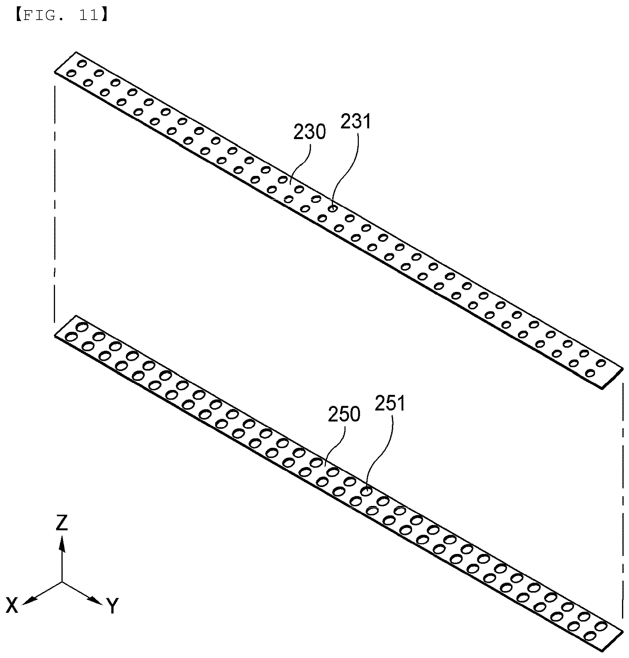

FIG. 9 is a sectional view taken along line B-B' of FIG. 5 as a third preferred embodiment of the present invention, FIG. 10 is an exploded perspective view of a second heat dissipation portion and a coating layer, and FIG. 11 is an exploded perspective view of a second heat dissipation portion and a coating layer as a fourth preferred embodiment of the present invention.

The third embodiment and the fourth embodiment of the present invention will be described with reference to FIGs. 9 to 11. The third embodiment and the fourth embodiment are identical in construction to the first embodiment or the second embodiment except for the coating layer.

In the third embodiment of the present invention, the coating layer 250 is provided on an inner surface of the second heat dissipation portion 230. In the fourth embodiment of the present invention, the coating layer 250 is provided on an outer surface of the second heat dissipation portion 230.

The coating layer 250 is provided with a plurality of fourth through-holes 251. It is preferable for the sectional area of each of the fourth through-holes 251 to be greater than the sectional area of each of the second through-holes 231 and for all of the second through-holes 231 to be exposed through the fourth through-holes 251. It is more preferable for the coating layer 250 to be made of a thermally conductive resin that is melted at a lower temperature than the second heat dissipation portion 230, and it is most preferable for the first heat dissipation portion 220 to form an acute angle of greater than 0° to less than 90° with the first surface of the case body 100 based on the first surface.

When a thermal runaway phenomenon occurs in a battery cell due to various causes, high-temperature gas and flames may be generated in the battery cell. In the third and fourth embodiments, it is possible to block introduction of air into the case, whereby it is possible to minimize a possibility of fire outbreak.

Specifically, when battery cells received in the battery case are normally operated, heat in the battery case is easily discharged through the second through-holes 231. When the temperature in the battery case reaches the melting temperature of the coating layer 250 made of the thermally conductive resin due to thermal runaway, however, the thermally conductive resin is melted.

In particular, when the second heat dissipation portion 230 having the coating layer 250 attached thereto forms an acute angle with the first surface of the case body 100, the melted coating layer 250 flows down along the surface of the second heat dissipation portion 230 to fill the second through-holes 231, whereby it is possible to minimize introduction of outside air into the battery case.

Meanwhile, when the battery cells are received in the case body 100, various types of battery cells may be used.

That is, the battery cells may be classified into a can-shaped battery cell having an electrode assembly mounted in a metal can and a pouch-shaped battery cell having an electrode assembly mounted in a pouch configured to have a laminate sheet structure.

The can-shaped battery cell may be classified as a cylindrical battery cell or a prismatic battery cell depending on the shape of the metal can, and the cylindrical battery cell may include a cylindrical battery can, a jelly-roll type electrode assembly received in the battery can, and a cap assembly coupled to an upper part of the battery can. Here, the cylindrical battery can may be made of a lightweight conductive metal material, such as aluminum, stainless steel, or an alloy thereof.

The electrode assembly is manufactured by alternately stacking an electrode and a separator, and the electrode is formed by applying an electrode active material to an electrode current collector.

The electrode active material is classified as a positive electrode active material or a negative electrode active material. A conductive agent and a binder are added to the active material to manufacture a slurry, and the slurry is applied to a metal foil.

Here, the positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃; however, the present invention is not limited thereto.

The conductive agent is generally added so that the conductive agent accounts for 1 to 30 weight% based on the total weight of a mixture including the positive electrode active material.

The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is a component assisting in binding between the active material and the conductive agent and in binding with the current collector, is generally added in an amount of 1 to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene monomer (EPDM), sulfonated EPDM, styrene butadiene rubber, fluoro rubber, and various copolymers.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto. Of course, the conductive agent and the binder described above may be optionally further included in the negative electrode active material.

The pouch-shaped battery cell includes a pouch case, an electrode assembly, and an electrode lead. The pouch case has a pocket type receiving space formed therein in order to receive the electrode assembly. In general, a laminate sheet constituted by an outer resin layer, a metal layer, and an inner resin layer is punched to form the receiving space.

Specifically, the outer resin layer is located at the outermost side, and the outer resin layer may be made of a heat-resistant polymer that exhibits excellent tensile strength, resistance to moisture permeation, and resistance to air transmission such that the outer resin layer exhibits high heat resistance and chemical resistance while protecting the received electrode assembly. As an example, the outer resin layer may be made of nylon or polyethylene terephthalate; however, the present invention is not limited thereto.

The metal layer, which is disposed so as to abut the outer resin layer, corresponds to a barrier layer configured to prevent moisture or various kinds of gas from permeating into the case from the outside. An aluminum thin film, which is lightweight and easily shapeable, may be used as a preferred material for the metal layer.

The inner resin layer is disposed in direct contact with the electrode assembly, and therefore the inner resin layer must exhibit high insulation properties and high resistance to an electrolytic solution. In addition, the inner resin layer must exhibit high sealability in order to hermetically seal the case from the outside, i.e. a thermally-bonded sealed portion between inner layers must exhibit excellent thermal bonding strength. The inner resin layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Of course, the electrode active material and the binder described above are applied to each of the negative electrode and the positive electrode.

A positive electrode lead and a negative electrode lead constituting a pair of electrode leads are electrically connected to a positive electrode tab and a negative electrode tab, respectively, and are exposed outwards from the pouch case.

It is obvious that, when a plurality of battery cells is received in the case body to constitute a battery module, various parts, such as a busbar and various circuit boards, are provided in addition to the battery cells and the case body.

Also, when a plurality of battery modules is received in the case body to constitute a battery pack, various parts necessary to connect the battery modules to each other, such as a connection busbar and various circuit boards, may be mounted.

In addition, the battery module or the battery pack described above may be used as a power source for various devices, such as an electric vehicle (EV), a hybrid electric vehicle (HEV), a plug-in hybrid electric vehicle (P-HEV), and an energy storage system (ESS).

Although the specific details of the present invention have been described in detail, those skilled in the art will appreciate that the detailed description thereof discloses only preferred embodiments of the present invention and thus does not limit the scope of the present invention.

### (Description of Reference Symbols)

100: Case body
110: Opening
200: Ventilation unit
210: Frame
220: First heat dissipation portion
221: First through-hole 222: Support portion
230: Second heat dissipation portion
231: Second through-hole
240: Third heat dissipation portion
241: Third through-hole
250: Coating layer
251: Forth through-hole
L1: Length of first heat dissipation portion
L2: Length of second heat dissipation portion

## Claims

1. A battery case comprising:
a case body (100) having a hollow structure and at least one opening (110); and
a ventilation unit (200) mounted in the at least one opening (110),
wherein the ventilation unit (200) comprises:
a frame (210) configured to define an outer part thereof;
at least one first heat dissipation portion (220) disposed in the frame (210) so as to be inclined at a predetermined angle, the at least one first heat dissipation portion (220) having a plate shape; and
a second heat dissipation portion (230) located along an upper edge and/or a lower edge of the at least one first heat dissipation portion (220), the second heat dissipation portion (230) being provided with a plurality of second through-holes (231).

2. The battery case according to claim 1, wherein the lower edge of the at least one first heat dissipation portion (220) is inclined more toward an outside of the case body (100) than the upper edge of the at least one first heat dissipation portion (220).

3. The battery case according to claim 1, wherein the at least one first heat dissipation portion (220) is located parallel to a first surface of the case body (100).

4. The battery case according to claim 1, wherein the at least one first heat dissipation portion (220) is formed so as to form an acute angle with a first surface of the case body (100).

5. The battery case according to claim 1, wherein the at least one first heat dissipation portion (220) includes a metal material or a thermally conductive resin.

6. The battery case according to claim 5, wherein the second heat dissipation portion (230) includes a metal material or a thermally conductive resin.

7. The battery case according to claim 1, further comprising:
a third heat dissipation portion (240) having a plate shape located at an outer surface of the at least one first heat dissipation portion (220), the third heat dissipation portion (240) being provided with a plurality of third through-holes (241),
wherein the at least one first heat dissipation portion (220) is provided with a plurality of first through-holes (221) and a support portion (222) spaced apart from the outer surface of the at least one first heat dissipation portion (220) by a predetermined distance such that the third heat dissipation portion (240) is slidable, the support portion (222) being configured to cover an edge of the third heat dissipation portion (240), and
wherein some or all of the plurality of first through-holes (221) and some or all of the plurality of third through-holes (241) overlap each other or all of the plurality of first through-holes (221) and all of the plurality of third through-holes (241) do not overlap each other due to movement of the third heat dissipation portion (240).

8. The battery case according to claim 7, wherein each of the at least one first heat dissipation portion (220), the second heat dissipation portion (230), and the third heat dissipation portion (240) includes a metal material.

9. The battery case according to claim 1, wherein:
a coating layer (250) having a plurality of fourth through-holes (251) is located on an inner surface or an outer surface of the second heat dissipation portion (230),
a sectional area of each of the plurality of fourth through-holes (251)is greater than a sectional area of each of the plurality of second through-holes (231),
all of the plurality of second through-holes (231) are exposed through the plurality of fourth through-holes (251), and
the coating layer (250) includes a thermally conductive resin that is melted at a lower temperature than the second heat dissipation portion (230).

10. The battery case according to claim 9, wherein the at least one first heat dissipation portion (220) is formed so as to form an acute angle with a first surface of the case body (100).

11. A battery module comprising:
the battery case according to any one of claims 1 to 10; and
a plurality of battery cells received in the battery case.

12. The battery module according to claim 11, wherein each of the plurality of battery cells is any one of a cylindrical battery cell, a prismatic battery cell, and a pouch-shaped battery cell.

13. A battery pack comprising:
the battery case according to any one of claims 1 to 10; and
a plurality of battery modules received in the battery case.

## Patentansprüche

1. Batteriegehäuse, umfassend:
einen Gehäusekörper (100), welcher eine hohle Struktur und wenigstens eine Öffnung (110) aufweist; und
eine Belüftungseinheit (200), welche in der wenigstens einen Öffnung (110) montiert ist,
wobei die Belüftungseinheit (200) umfasst:
einen Rahmen (210), welcher dazu eingerichtet ist, einen äußeren Teil davon zu definieren;
wenigstens einen ersten Wärmeabgabeabschnitt (220), welcher in dem Rahmen (210) angeordnet ist, um mit einem vorbestimmten Winkel geneigt zu sein, wobei der wenigstens eine erste Wärmeabgabeabschnitt (220) eine Plattenform aufweist; und
einen zweiten Wärmeabgabeabschnitt (230), welcher entlang eines oberen Rands und/oder eines unteren Rands des wenigstens einen ersten Wärmeabgabeabschnitts (220) angeordnet ist, wobei der zweite Wärmeabgabeabschnitt (230) mit einer Mehrzahl zweiter Durchgangslöcher (231) bereitgestellt ist.

2. Batteriegehäuse nach Anspruch 1, wobei der untere Rand des wenigstens einen ersten Wärmeabgabeabschnitts (220) weiter in Richtung einer Außenseite des Gehäusekörpers (100) geneigt ist als der obere Rand des wenigstens einen ersten Wärmeabgabeabschnitts (220).

3. Batteriegehäuse nach Anspruch 1, wobei der wenigstens eine erste Wärmeabgabeabschnitt (220) parallel zu einer ersten Fläche des Gehäusekörpers (100) angeordnet ist.

4. Batteriegehäuse nach Anspruch 1, wobei der wenigstens eine erste Wärmeabgabeabschnitt (220) gebildet ist, um mit einer ersten Fläche des Gehäusekörpers (100) einen spitzen Winkel zu bilden.

5. Batteriegehäuse nach Anspruch 1, wobei der wenigstens eine erste Wärmeabgabeabschnitt (220) ein Metallmaterial oder ein thermisch leitfähiges Harz umfasst.

6. Batteriegehäuse nach Anspruch 5, wobei der zweite Wärmeabgabeabschnitt (230) ein Metallmaterial oder ein thermisch leitfähiges Harz umfasst.

7. Batteriegehäuse nach Anspruch 1, ferner umfassend:
einen dritten Wärmeabgabeabschnitt (240), welcher eine Plattenform aufweist und an einer äußeren Fläche des wenigstens einen ersten Wärmeabgabeabschnitts (220) angeordnet ist, wobei der dritte Wärmeabgabeabschnitt (240) mit einer Mehrzahl dritter Durchgangslöcher (241) bereitgestellt ist,
wobei der wenigstens eine erste Wärmeabgabeabschnitt (220) mit einer Mehrzahl erster Durchgangslöcher (221) und einem Stützabschnitt (222) bereitgestellt ist, welcher von der äußeren Fläche des wenigstens einen ersten Wärmeabgabeabschnitts (220) um einen vorbestimmten Abstand beabstandet ist, so dass der dritte Wärmeabgabeabschnitt (240) schiebbar ist, wobei der Stützabschnitt (222) dazu eingerichtet ist, einen Rand des dritten Wärmeabgabeabschnitts (240) abzudecken, und
wobei einige oder alle aus der Mehrzahl erster Durchgangslöcher (221) und einige oder alle aus der Mehrzahl dritter Durchgangslöcher (241) einander überlappen oder alle aus der Mehrzahl erster Durchgangslöcher (221) und alle aus der Mehrzahl dritter Durchgangslöcher (241) einander aufgrund einer Bewegung des dritten Wärmeabgabeabschnitts (240) nicht überlappen.

8. Batteriegehäuse nach Anspruch 7, wobei jeder aus dem wenigstens einen ersten Wärmeabgabeabschnitt (220), dem zweiten Wärmeabgabeabschnitt (230) und dem dritten Wärmeabgabeabschnitt (240) ein Metallmaterial umfasst.

9. Batteriegehäuse nach Anspruch 1, wobei:
eine Beschichtung (250), welche eine Mehrzahl vierter Durchgangslöcher (251) aufweist, an einer inneren Fläche oder einer äußeren Fläche des zweiten Wärmeabgabeabschnitts (230) angeordnet ist,
eine Schnittfläche jedes aus der Mehrzahl vierter Durchgangslöcher (251) größer ist als eine Schnittfläche jedes aus der Mehrzahl zweiter Durchgangslöcher (231) ist,
alle aus der Mehrzahl zweiter Durchgangslöcher (231) durch die Mehrzahl vierter Durchgangslöcher (251) exponiert sind, und
die Beschichtung (250) ein thermisch leitfähiges Harz umfasst, welches bei einer niedrigeren Temperatur schmilzt als der zweite Wärmeabgabeabschnitt (230).

10. Batteriegehäuse nach Anspruch 9, wobei der wenigstens eine erste Wärmeabgabeabschnitt (220) gebildet ist, um mit einer ersten Fläche des Gehäusekörpers (100) einen spitzen Winkel zu bilden.

11. Batteriemodul, umfassend:
das Batteriegehäuse nach einem der Ansprüche 1 bis 10; und
eine Mehrzahl von Batteriezellen, welche in dem Batteriegehäuse aufgenommen sind.

12. Batteriemodul nach Anspruch 11, wobei jede aus der Mehrzahl von Batteriezellen eine jegliche aus einer zylindrischen Batteriezelle, einer prismatischen Batteriezelle und einer beutelförmigen Batteriezelle ist.

13. Batteriepack, umfassend:
das Batteriegehäuse nach einem der Ansprüche 1 bis 10; und
eine Mehrzahl von Batteriemodulen, welche in dem Batteriegehäuse aufgenommen sind.

## Revendications

1. Boîtier de batterie comprenant :
un corps de boîtier (100) ayant une structure creuse et au moins une ouverture (110) ; et
une unité de ventilation (200) montée dans l'au moins une ouverture (110),
dans lequel l'unité de ventilation (200) comprend :
un cadre (210) configuré pour définir une partie extérieure de celle-ci ;
au moins une première portion de dissipation de chaleur (220) disposée dans le cadre (210) de manière à être inclinée à un angle prédéterminé, l'au moins une première portion de dissipation de chaleur (220) ayant une forme de plaque ; et
une deuxième portion de dissipation de chaleur (230) située le long d'un bord supérieur et/ou d'un bord inférieur de l'au moins une première portion de dissipation de chaleur (220), la deuxième portion de dissipation de chaleur (230) étant dotée d'une pluralité de deuxièmes trous traversants (231).

2. Boîtier de batterie selon la revendication 1, dans lequel le bord inférieur de l'au moins une première portion de dissipation de chaleur (220) est incliné davantage vers un extérieur du corps de boîtier (100) que le bord supérieur de l'au moins une première portion de dissipation de chaleur (220).

3. Boîtier de batterie selon la revendication 1, dans lequel l'au moins une première portion de dissipation de chaleur (220) est située parallèlement à une première surface du corps de boîtier (100).

4. Boîtier de batterie selon la revendication 1, dans lequel l'au moins une première portion de dissipation de chaleur (220) est formée de manière à former un angle aigu avec une première surface du corps de boîtier (100).

5. Boîtier de batterie selon la revendication 1, dans lequel l'au moins une première portion de dissipation de chaleur (220) comporte une matière métallique ou une résine thermoconductrice.

6. Boîtier de batterie selon la revendication 5, dans lequel la deuxième portion de dissipation de chaleur (230) comporte un matériau métallique ou une résine thermoconductrice.

7. Boîtier de batterie selon la revendication 1, comprenant en outre :
une troisième portion de dissipation de chaleur (240) ayant une forme de plaque située au niveau d'une surface extérieure de l'au moins une première portion de dissipation de chaleur (220), la troisième portion de dissipation de chaleur (240) étant dotée d'une pluralité de troisièmes trous traversants (241),
dans lequel l'au moins une première portion de dissipation de chaleur (220) est dotée d'une pluralité de premiers trous traversants (221) et d'une portion de support (222) espacée de la surface extérieure de l'au moins une première portion de dissipation de chaleur (220) d'une distance prédéterminée de sorte que la troisième portion de dissipation de chaleur (240) soit coulissante, la portion de support (222) étant configurée pour recouvrir un bord de la troisième portion de dissipation de chaleur (240), et
dans lequel certains ou la totalité de la pluralité de premiers trous traversants (221) et certains ou la totalité de la pluralité de troisièmes trous traversants (241) se chevauchent ou la totalité de la pluralité de premiers trous traversants (221) et la totalité de la pluralité de troisièmes trous traversants (241) ne se chevauchent pas en raison du mouvement de la troisième portion de dissipation de chaleur (240).

8. Boîtier de batterie selon la revendication 7, dans lequel chacune de l'au moins une première portion de dissipation de chaleur (220), de la deuxième portion de dissipation de chaleur (230) et de la troisième portion de dissipation de chaleur (240) comporte une matière métallique.

9. Boîtier de batterie selon la revendication 1, dans lequel :
une couche de revêtement (250) ayant une pluralité de quatrièmes trous traversants (251) est située sur une surface intérieure ou une surface extérieure de la deuxième portion de dissipation de chaleur (230),
une section transversale de chacun de la pluralité de quatrièmes trous traversants (251) est supérieure à une section transversale de chacun de la pluralité de deuxièmes trous traversants (231),
la totalité de la pluralité de deuxièmes trous traversants (231) sont exposés à travers la pluralité de quatrièmes trous traversants (251), et
la couche de revêtement (250) comporte une résine thermoconductrice qui fond à une température plus basse que la deuxième portion de dissipation de chaleur (230).

10. Boîtier de batterie selon la revendication 9, dans lequel l'au moins une première portion de dissipation de chaleur (220) est formée de manière à former un angle aigu avec une première surface du corps de boîtier (100).

11. Module de batterie comprenant :
le boîtier de batterie selon l'une quelconque des revendications 1 à 10 ; et
une pluralité de cellules de batterie reçues dans le boîtier de batterie.

12. Module de batterie selon la revendication 11, dans lequel chacune de la pluralité de cellules de batterie est l'une quelconque parmi une cellule de batterie cylindrique, une cellule de batterie prismatique ou une cellule de batterie en forme de poche.

13. Bloc-batterie comprenant :
le boîtier de batterie selon l'une quelconque des revendications 1 à 10 ; et
une pluralité de modules de batterie reçus dans le boîtier de batterie.
